# EUROPEAN PATENT SPECIFICATION

(11) **EP 2 869 288 B1**
(45) Date of publication and mention of the grant of the patent: **10.10.2018**
(21) Application number: 13808671.5
(22) Date of filing: 15.04.2013
(51) Int. Cl.: G09F 9/33, B29C 43/18, B29K 307/00, F21K 99/00, F21V 21/00, B29L 31/34

(54) **MANUFACTURING METHOD FOR SUPPORT SUBSTRATE, AND LED DISPLAY DEVICE**
HERSTELLUNGSVERFAHREN FÜR EIN TRÄGERSUBSTRAT UND LED-ANZEIGEVORRICHTUNG
PROCÉDÉ DE FABRICATION POUR SUBSTRAT DE SUPPORT, ET DISPOSITIF D'AFFICHAGE LED

(30) Priority: 29.06.2012 CN 201210220416
(43) Date of publication of application: 06.05.2015
(73) Proprietor: Beijing Glux Creative Technology Co. Ltd., Beijing 100089 (CN)
(72) Inventor: LAN, Xia, HaiDian District Beijing 100089 (CN)
(74) Representative: Uexküll & Stolberg
(86) International application number: PCT/CN2013/074209
(87) International publication number: WO 2014/000496

(56) References cited:
- WO-A1-2007/116116
- CN-A- 101 870 176
- CN-A- 102 081 885
- CN-A- 102 737 554
- CN-U- 201 438 351
- CN-U- 201 438 351
- CN-U- 202 042 137
- CN-U- 202 282 127
- CN-Y- 201 355 539
- JP-A- 2011 138 020
- US-A1- 2005 258 446
- US-A1- 2010 327 737

## Description

### Technical Field

The disclosure relates to the field of LED display, and specifically, to an LED display device having a good stability, a portability and a rapid heat dissipation.

### Background

A plurality of unit LED display screens is used to assemble an LED display device having a suitable size on user's requirements. Each unit LED display screen has components of a frame, a lamp plate, a control panel, a power supply, and connectors. The frame is used to support all other components of the unit LED display screen. The assembled LED display device should not only bear a gravity load from all the unit LED display screens thereon and an external force from a wind load, but also prevent a deformation of the frame caused by temperature changes, etc. Hence, the frame should have a high strength and a good stability, to resist such pressure on the LED display device due to the gravity, such tension caused by wind and such deformation of the frame caused by temperature changes. The lamp plate is formed with a plurality of LED light-emitting units arranged in a dot-matrix. A driving circuit and a system circuit are also arranged on the lamp plate. A lot of heat is produced during operation of the LED light-emitting units and circuits. If heat cannot be dissipated in a timely manner, the operation of the LED light-emitting units is influenced, which results in chromatic aberration of the LED light-emitting units and a poor display effect of the LED display device, and also, the lifetime of the LED light-emitting units is decreased and thus the lifetime of the LED display device is decreased.

From the foregoing, the bearing capability of the frame of the unit LED display screen and heat dissipation are two important issues with the LED display screen. At present, most LED display devices are commonly designed as a box (box-shaped design) to bear weight and resist external forces, and a fan is arranged inside the box to address the heat dissipation. The box-shaped design has disadvantages of complicate manufacturing process, big noise caused by the fan, large volume, heavy weight and inconvenience in assembly and disassembly.

US 2005/258446 A1 discloses a light emitting diode (LED) assembly with a vented printed circuit board including a plurality of LED modules disposed in an array with a multilayered substrate and a plurality of vents. The multilayer substrate includes a thermal cooling layer which is in thermal communication with the LED modules for heat dissipation and an external insulating layer that includes a plurality of fluid apertures configured for fluid communication with the thermal cooling layer.

US 2010/327737 A1 discloses an electro-optical device including a display panel having an electro-optical layer, a first resin film stacked on the display panel to cover a first surface on the side of a display area of the display panel, and a second resin film stacked on the display panel to cover a second surface opposite the first surface, and at least one reinforcing member disposed on at least one of the first resin film and the second resin film.

CN Patent ZL200920133332.1 discloses an LED display screen using a metal aluminum sheet as a heat dissipation module to conduct the heat energy from the unit LED display screens and driving circuits to the air. Also, the aluminum sheet is used as a frame to support the unit LED display screens. Although the aluminum sheet can produce a good heat dissipation effect to address the heat dissipation of the unit LED display screen, its temperature may increase during the heat dissipation in various operation environments, which results in a deformation of the aluminum sheet and a poor stability. In addition, due to the high density of metal, the sheet made of such metal is heavy, which may cause difficulty in assembly and transportation. Moreover, the heavy metal aluminum sheet results in a large gravity of the unit LED display screen, and a large LED display device lacks of bearing capability and strength of resisting external forces. Therefore, it is urgent to design an LED display device with a simple structure, a good heat conductivity, a portability, a high strength and a good stability.

### Summary

In order to address the disadvantages of a heavy weight and a low strength of the LED display device in the conventional technology due to the metal substrate, one of objects of the disclosure is to provide an LED display device which has not only a simple and light-weight structure, but also a high compressive strength, a high stability, and a good thermal conductivity.

The technical solutions for addressing the technical issues of the disclosure are briefly described as follows.

A method for manufacturing a supporting substrate for any of the below LED display screens, which method includes the following steps S1 to S4.

Step S1 includes: preparing a prepreg, which includes:
preparing a carbon fibre precursor material, and knitting the carbon fibre precursor material into a carbon fibre fabric, adding resin into the carbon fibre fabric to form the prepreg.

Step S2 includes: preparing supporting substrate sheets, which includes:
cutting and punching the prepreg, to obtain the supporting substrate sheets with suitable sizes.

Step S3 includes: preforming, which includes:
layer-designing the prepared supporting substrate sheets in a mold. Step S4 includes: molding, which includes:
hot-pressing the layer-designed supporting substrate sheets in the mold.

An LED display device being assembled by at least one of the below unit LED display screens. A unit LED display screen includes at least one LED display module, a supporting substrate and a control panel. The supporting substrate is arranged between the LED display module and the control panel in a sandwich manner, and is made of carbon fibre, wherein the LED display module comprises: a front cover, a lamp plate and a pad which are arranged in sequence, the pad is adhered to the lamp plate by pouring a thermal-conductive material into through-holes of the pad, and is adhered to the side of the supporting substrate towards the lamp plate.

Further, the LED display module, wherein LED light-emitting units and circuits are arranged on the lamp plate. The LED light-emitting units are arranged in a dot-matrix. The LED display module is fixed on a side of the supporting substrate.

Further, the LED display device includes a rear cover and an X-shaped box. The control panel and a power supply are arranged inside the X-shaped box. The X-shaped box is arranged in the rear cover. The rear cover is fixedly connected to the supporting substrate via bolts and studs arranged in the supporting substrate.

Further, through-holes are arranged in both of the supporting substrate and a backing plate. The X-shaped box accomodating the control panel is arranged on another side of the supporting substrate opposite to the LED display module. An interface on the control panel is electrically connected to the lamp plate of the LED display module via the through-holes.

Further, reinforcing bosses are arranged around the supporting substrate. The reinforcing bosses are protruded on a side of the supporting substrate towards the rear cover. Each of the reinforcing bosses has a thickness ranging from 2mm to 8mm.

Further, the supporting substrate has a thickness ranging from 0.8mm to 2mm.

Further, each of the reinforcing bosses has a cross section of trapezoid, rectangle or ellipse.

Further, connecting bases and locating pins for connecting to the adjacent unit LED display screen can be arranged on each of the reinforcing bosses at four corners of the supporting substrate.

Further, thermal conducting columns can be also arranged on the lamp plate. The thermal conducting columns are exposed in the atmospheric environment by passing through the backing plate and the supporting substrate.

The disclosure provides the following beneficial effects: the supporting substrate made of a carbon fibre is applied to the LED display device, and accordingly, the LED display device is not only simple in structure and light-weighted, but also has a high compressive strength, a high stability, a convenient installation and transportation, and a good thermal conductivity.

### Brief Description of the Drawings

Fig. 1 is a flow chart of preparing an LED supporting substrate according to the disclosure.
Fig. 2 is a structural schematic view of a unit LED display screen according to the disclosure.
Fig. 3 is a lateral view of the unit LED display screen according to the disclosure.
Fig. 4 is a structure view of a supporting substrate according to the disclosure.
Fig. 5 is a cross-sectional view taken along line B-B in Fig. 3.
Fig. 6 is a structure view of a stud connected to a rear cover on the supporting substrate according to the disclosure.
Fig. 7 is a structure view of studs and locating pins connected to adjacent unit LED display screens on the supporting substrate according to the disclosure.

### Detailed Description of the Invention

Hereinafter, the disclosure is further described in combination with the accompanying drawings and exemplary embodiments.

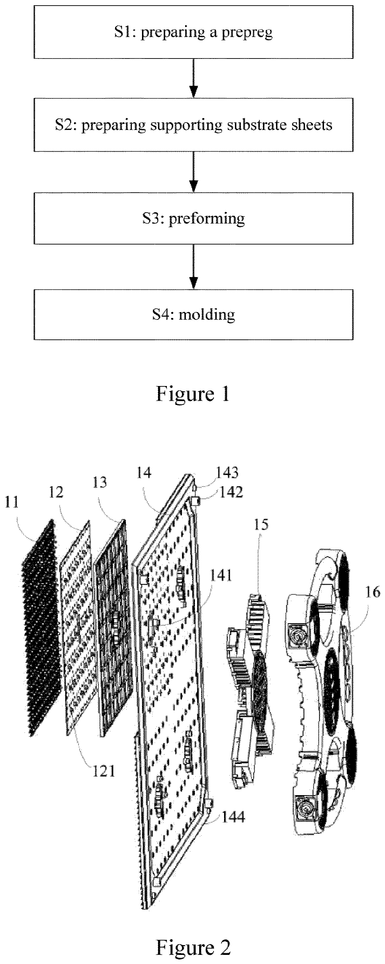

Referring to Fig.1, a method for manufacturing a supporting substrate according to the disclosure includes the following steps S1 to S4.

Step S1 includes: preparing a prepreg, including:
preparing a carbon fibre precursor material, knitting the carbon fibre precursor material into a carbon fibre fabric, and adding resin and so on into the carbon fibre fabric to form the prepreg.

The carbon fibre precursor material and quantification of the added materials may be selected on requirements. For example, suitable precursor and adding amount of materials such as resin may be selected according to strength and modulus of the product, so as to form a prepreg with different characteristics.

Step S2 includes: preparing supporting substrate sheets, including:
cutting and punching the prepreg, to obtain the supporting substrate
   sheets with suitable sizes.

The prepared prepreg is cut according to the size of the supporting substrate and punched at positions of reserved through-holes.

Step S3 includes: preforming, including:
layer-designing the prepared supporting substrate sheets in a mold.

The supporting substrate sheets which are obtained by cutting in step S2 are laid layer by layer in the mold, where a plurality of layers of the supporting substrate sheets with the size of a reinforcing boss are laid at positions of the reinforcing bosses, or, partial thickened fillers are laid at centers of the reinforcing bosses.

Step S4 includes: molding, which includes:
hot-pressing the layer-designed and laid supporting substrate sheets in
   the mold, so as to manufacture a supporting substrate.

In the process of hot-pressing the supporting substrate sheets layered and laid in step S3 at a high temperature, the temperature depends on characteristics of the supporting substrate.

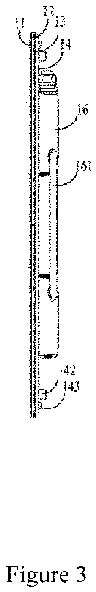

Referring to Figs. 2 and 3, a unit LED display screen 1 is provided by the present embodiment. The unit LED display screen 1 includes: a front cover 11, a lamp plate 12, a pad 13, a supporting substrate 14, a control panel (not shown) and a rear cover 16, which are arranged in sequence. Each unit LED display screen 1 includes four LED display modules. Each LED display module includes the front cover 11, the lamp plate 12 and the pad 13. The front cover 11 is arranged over the lamp plate 12. LED light-emitting units, circuits and chips are arranged on the lamp plate 12. The LED light-emitting units are arranged in a dot-matrix on a side of the lamp plate 12 towards the front cover 11. The front cover 11 is arranged over the side of the lamp plate 12 on which the LED light-emitting units are arranged. Light holes are arranged on the front cover 11 at positions corresponding to the LED light-emitting units. The chips are arranged on the side of the lamp plate 12 opposite to the front cover. The pad 13 is adhered to the side of the lamp plate on which the chips are arranged. A plurality of though holes are arranged in the pad 13 for receiving the chips which are arranged on the side of the lamp plate 12 towards the pad and raised on the lamp plate. The LED display module is formed by sequentially stacking the front cover 11, the lamp plate 12 and the pad 13. The LED display module is fixed on the supporting substrate 14.

The supporting substrate 14 is arranged between the pad 13 and an X-shaped box 15 accommodating the control panel in a sandwich manner. The control panel is arranged inside the X-shaped box 15. A power supply may also be arranged inside the X-shaped box 15. The X-shaped box 15 is fixed on the supporting substrate via bolts. The X-shaped box is arranged in rear cover 16. The rear cover 16 is fixedly connected to the supporting substrate 14. The supporting substrate 14 is configured to support the LED display module formed by the front cover 11, the lamp plate 12 and the pad 13, the X-shaped box 15 for accommodating the control panel and the power supply, and the rear cover 16. The supporting substrate 14 bears the pressure of the whole unit LED display screen 1.

Through-holes 141 are arranged in the supporting substrate 14. Through-holes 131 corresponding to the through-holes 141 are arranged in the pad 13 at positions corresponding to the through-holes 141. An interface of the control panel inside the X-shaped box 15 is electrically connected to the lamp plate 12 via the through-holes 141 and 131.

Studs 145 are arranged on the supporting substrate 14. The rear cover 16 is arranged covering the control panel, and is fixedly connected to the supporting substrate 14 via bolts and the studs 145 arranged on the supporting substrate 14. The power supply is arranged inside the X-shaped box 15 and connected to the control panel for supplying electric power to the lamp plate 12 and the control panel. A handle is arranged on the rear cover 16 for facilitating installation and transportation.

Reinforcing bosses 144 are arranged around the supporting substrate 14. Connecting bases 142 and locating pins 143 for connecting to adjacent unit LED display screens are arranged on the reinforcing bosses 144 at four corners of the supporting substrate 14.

Since the LED light-emitting units and circuits are arranged on the lamp plate 12 and the LED light-emitting units are arranged in a dot-matrix, heat energy, which is produced during operation of the LED light-emitting units, is conducted to the lamp plate 12 with a uniform distribution. The pad 13 is adhered to the lamp plate 12 by pouring a thermal-conductive material into the through-holes of the pad 13, and is adhered to the side of the supporting substrate 14 towards the lamp plate, so that the heat energy of the lamp plate 12 is conducted to the supporting substrate 14. The heat energy is conducted to the atmospheric environment with thermal conductivity of the supporting substrate 14, so as to achieve heat dissipation of the LED display screen.

At least one unit LED display screen 1 is assembled to form an LED display device. The supporting substrate 14 bears not only a pressure from its own gravity, but also a gravity load from all the unit LED display screens thereon, and hence, the supporting substrate 14 shall be made of materials with high strength. Further, a lot of heat energy is produced during operation of the LED light-emitting units, and the heat energy is conducted to the supporting substrate and further to the atmospheric environment via the supporting substrate. The temperature of the supporting substrate changes due to the heat energy conducted to the supporting substrate 14. Therefore, the supporting substrate 14 shall be made of materials with good thermal conductivity and insusceptability of deformation in high temperature. In addition, since the LED display device includes a plurality of unit LED display screens and such a large-sized LED display device is assembled on the heights, bulky unit LED display screens causes trouble for manual operation and transportation. In conclusion, light materials with a high strength and a high stability are suitable for manufacturing the supporting substrate.

The higher the specific strength of the material is, the lighter the weight of the component is. The higher the specific modulus is, the higher the rigidity of the component will be. The specific strength is a ratio of the strength to the density of the material. The supporting substrate is made of carbon fibre. Carbon fibre material is a new material with good mechanical properties. The specific weight of the carbon fibre material is less than a quarter of that of steel. The carbon fibre material generally has a tensile strength more than 3500Mpa, while steel has a tensile strength of about 500Mpa. That is, the tensile strength of the carbon fibre material is 7 to 9 times that of steel, and a tensile elastic strength of carbon fibre material is 230 to 430Gpa which is higher than that of steel. The specific strength of the carbon fibre material can reach more than 2000Mpa/g/cm3, while the specific strength of steel is 59Mpa/g/cm3. The specific modulus of the carbon fibre material is 130Gpa/g/cm3 which is higher than that of steel.

The supporting substrate 14 may have a thickness ranging from 0.8mm to 2mm.

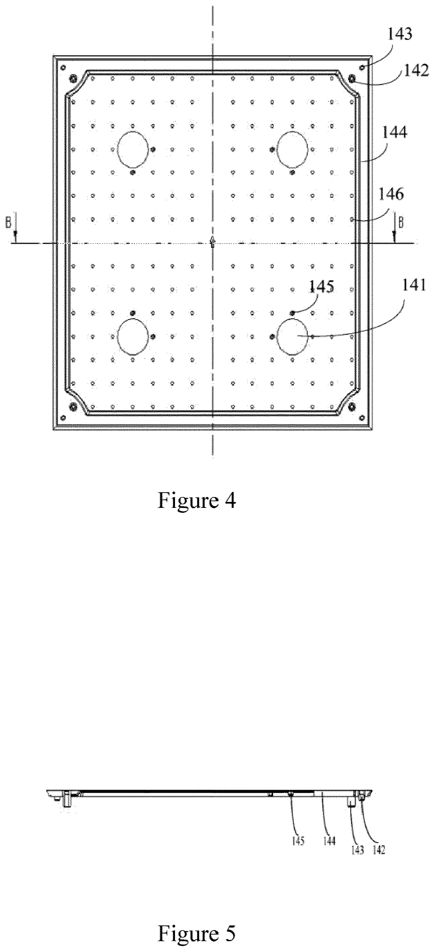

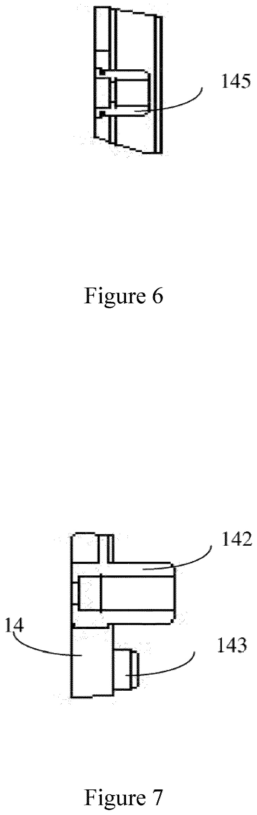

Referring to Figs. 4 to 7, the through-holes 141 are arranged in the supporting substrate 14 for connecting the interface of the control panel to the lamp plate. The studs 145 are arranged on an outer side of the through-holes 141 for fixing the rear cover 16 on the supporting substrate 14. In addition, the reinforcing bosses 144 are arranged around the supporting substrate 14. Each of the reinforcing bosses 144 may have a thickness ranging from 4mm to 6mm, for reinforcing the strength of the supporting substrate 14. Each of the reinforcing bosses 144 may be configured to have a cross section of trapezoid, rectangle or ellipse, and preferably, the trapezoid in this embodiment. The connecting bases 142 and the locating pins 143 connected to the adjacent unit LED display screens are arranged on the reinforcing bosses 144 at the four corners of the supporting substrate 14.

In order to further reinforce heat dissipation of the LED display screen, another embodiment is provided in the disclosure. On the basis of the embodiment above, as shown in Fig. 2, thermal conducting columns 121 are arranged on the lamp plate 12. The thermal conducting columns 121 are made of materials with high thermal conductivity. The material of the thermal conducting columns 121 may be copper, aluminum, or the like. Correspondingly, the through-holes 146 are punched in the supporting substrate 14 compatible to the thermal conducting columns 121. The thermal conducting columns 121 are exposed in the atmospheric environment by passing through the through-holes 146 in the supporting substrate 14, enabling the heat energy produced by the lamp plate to be rapidly conducted to the supporting substrate and the atmospheric environment. Hence, the heat energy can be conducted rapidly, and the lifetime of the LED light-emitting units and chips can be lengthened accordingly.

A main index for evaluating an LED display device is heat dissipation and bearing capacity in the structural design of the LED display device. Through the design of a plate-type supporting substrate, the heat dissipation and bearing functions are implemented on the supporting substrate in the disclosure, so that the bulkiness of the box-shaped LED display device is completely changed, thus the LED display screen can be simple and light in structure. In addition, the supporting substrate is made of carbon fibre, and thus, with the characteristics of the carbon fibre material such as a high specific strength, a high specific modulus, a light-weighting, a high heat resistance, a high thermal conductivity, a high stability, and the like, not only the issue of heat dissipation is addressed, but also the weight of the LED display screen is reduced and also the bearing capacity of the LED display screen is improved, thereby increasing applicability of the LED display device, making convenience in assembly and disassembly and decreasing transportation costs.

It is to be understood that the various embodiments of the present disclosure described herein may be utilized in various orientations, such as inclined, inverted, horizontal, vertical, etc., and in various configurations, without departing from the principles of the present disclosure. The embodiments are described merely as examples of useful applications of the principles of the disclosure, which is not limited to any specific details of these embodiments. Of course, a person skilled in the art would, upon a careful consideration of the above description of representative embodiments of the disclosure, readily appreciate that many modifications, additions, substitutions, deletions, and other changes may be made to the specific embodiments, and such changes are contemplated by the principles of the present disclosure. Accordingly, the foregoing detailed description is to be clearly understood as being given by way of illustration and example only, the scope of the present invention being limited solely by the appended claims and their equivalents.

## Claims

1. A unit LED display screen, comprising: at least one LED display module, a supporting substrate (14), and a control panel, wherein the supporting substrate (14) is arranged between the LED display module and the control panel in a sandwich manner for supporting an LED display device, **characterized in that** the supporting substrate (14) is made of carbon fibre, and **in that** the LED display module comprises: a front cover (11), a lamp plate (12) and a pad (13) which are arranged in sequence, the pad (13) is adhered to the lamp plate (12) by pouring a thermal-conductive material into through-holes of the pad (13), and is adhered to the side of the supporting substrate (14) towards the lamp plate (12).

2. The LED display screen according to claim 1, wherein LED light-emitting units and circuits are arranged on the lamp plate (12), the LED light-emitting units being arranged in a dot-matrix, and wherein the LED display module is fixed on a side of the supporting substrate (14).

3. The LED display screen according to claim 1, wherein the LED display device further comprises a rear cover (16) and an X-shaped box (15), wherein the control panel and a power supply are arranged inside the X-shaped box (15), the X-shaped box (15) is arranged in the rear cover (16), and the rear cover (16) is fixedly connected to the supporting substrate (14).

4. The LED display screen according to claim 3, wherein through-holes are arranged in the supporting substrate (14), the X-shaped box (15) accommodating the control panel is arranged on another side of the supporting substrate (14) opposite to the LED display module, and an interface on the control panel is electrically connected to a lamp plate (12) of the LED display module via the through-holes.

5. The LED display screen according to claim 4, wherein reinforcing bosses (144) are arranged around the supporting substrate (14), and protruded on a side of the supporting substrate (14) towards the rear cover (16) for reinforcing a strength of the substrate.

6. The LED display screen according to claim 1, wherein the supporting substrate (14) has a thickness ranging from 0.8mm to 2mm.

7. The LED display screen according to claim 5, wherein each of the reinforcing bosses (144) has a thickness ranging from 2mm to 8mm.

8. The LED display screen according to claim 7, wherein each of the reinforcing bosses (144) has a cross section of trapezoid, rectangle or ellipse.

9. An LED display device being assembled by at least one unit LED display screen according to any of claims 1 to 8.

10. A method for manufacturing the supporting substrate (14) according to any of claims 1 to 8, comprising the following steps S1 to S4, wherein:
step S1 comprises: preparing a prepreg, which comprises:
preparing a carbon fibre precursor material, and knitting the carbon fibre precursor material into a carbon fibre fabric, adding resin into the carbon fibre fabric to form the prepreg;
step S2 comprises: preparing supporting substrate sheets, which comprises:
cutting and punching the prepreg, to obtain the supporting substrate sheets with suitable sizes;
step S3 comprises: preforming, which comprises:
layer-designing the prepared supporting substrate sheets in a mold; and step S4 comprises: molding, which comprises:
hot-pressing the layer-designed supporting substrate sheets in the mold.

## Patentansprüche

1. LED-Anzeigebildschirmeinheit, die mindestens ein LED-Anzeigemodul, ein Trägersubstrat (14) und ein Steuerfeld umfasst, wobei das Trägersubstrat (14) zwischen dem LED-Anzeigemodul und dem Steuerfeld in Sandwichweise angeordnet ist, um eine LED-Anzeigevorrichtung zu tragen, **dadurch gekennzeichnet, dass**
das Trägersubstrat (14) aus Kohlefaser gefertigt ist,
und dass das LED-Anzeigemodul eine Frontabdeckung (11), eine Lampenplatte (12) und eine Kontaktstelle (13) umfasst, die in Sequenz angeordnet sind, wobei die Kontaktstelle (13) an die Lampenplatte (12) geheftet wird, indem ein wärmeleitendes Material in Durchgangslöcher der Kontaktstelle (13) gegossen wird, und an die Seite des Trägersubstrats (14) in Richtung der Lampenplatte (12) geheftet wird.

2. LED-Anzeigebildschirm nach Anspruch 1, bei dem die Licht emittierenden Einheiten und Schaltkreise der LED auf der Lampenplatte (12) angeordnet sind, wobei die Licht emittierenden Einheiten der LED in einer Punktmatrix angeordnet sind, und wobei das LED-Anzeigemodul auf einer Seite des Trägersubstrats (14) fixiert ist.

3. LED-Anzeigebildschirm nach Anspruch 1, bei dem die LED-Anzeigevorrichtung ferner eine Rückseitenabdeckung (16) und eine X-förmige Box (15) umfasst, wobei das Steuerfeld und eine Stromversorgung im Inneren der X-förmigen Box (15) angeordnet sind, wobei die X-förmige Box (15) in der Rückseitenabdeckung (16) angeordnet ist und die Rückseitenabdeckung (16) fixiert mit dem Trägersubstrat (14) verbunden ist.

4. LED-Anzeigebildschirm nach Anspruch 3, bei dem Durchgangslöcher in dem Trägersubstrat (14) angeordnet sind, die X-förmige Box (15), in der das Steuerfeld untergebracht ist, auf einer anderen Seite des Trägersubstrats (14) gegenüber dem LED-Anzeigemodul angeordnet ist, und eine Schnittstelle auf dem Steuerfeld mittels der Durchgangslöcher elektrisch mit einer Lampenplatte (12) des LED-Anzeigemoduls verbunden ist.

5. LED-Anzeigebildschirm nach Anspruch 4, bei dem verstärkende Lochplatten (144) um das Trägersubstrat (14) herum angeordnet sind und auf einer Seite des Trägersubstrats (14) in Richtung der Rückseitenabdeckung (16) vorragen, um die Festigkeit des Substrats zu verstärken.

6. LED-Anzeigebildschirm nach Anspruch 1, bei dem das Trägersubstrat (14) eine Dicke im Bereich von 0,8 mm bis 2 mm aufweist.

7. LED-Anzeigebildschirm nach Anspruch 5, bei dem jede der verstärkenden Lochplatten (144) eine Dicke im Bereich von 2 mm bis 8 mm aufweist.

8. LED-Anzeigebildschirm nach Anspruch 7, bei dem jede der verstärkenden Lochplatten (144) einen trapezförmigen, rechteckigen oder elliptischen Querschnitt aufweist.

9. LED-Anzeigevorrichtung, die aus mindestens einer LED-Anzeigebildschirmeinheit gemäß einem der Ansprüche 1 bis 8 montiert wird.

10. Verfahren zum Fertigen des Trägersubstrats (14) gemäß einem der Ansprüche 1 bis 8, das die folgenden Schritte S1 bis S4 umfasst, wobei:
Schritt S1 umfasst: Herstellen eines Prepregs, bei dem ein Kohlefaservorläufermaterial hergestellt wird und das Kohlefaservorläufermaterial zu einem Kohlefasertextil verstrickt wird, dem Kohlefasertextil Harz zugefügt wird, um das Prepreg zu bilden;
Schritt S2 umfasst: Herstellen von Trägersubstratlagen, bei dem
das Prepreg geschnitten und gestanzt wird, um die Trägersubstratlagen mit geeigneten Größen zu erhalten;
Schritt S3 umfasst: Vorformen, bei dem
die hergestellten Trägersubstratlagen in einer Form in Schichten gestaltet werden; und
Schritt S4 umfasst: Formen, bei dem
die in Schichten gestalteten Trägersubstratlagen in der Form heißgepresst werden.

## Revendications

1. Ecran d'affichage à DEL unitaire, comprenant : au moins un module d'affichage à DEL, un substrat de support (14), et un panneau de commande, dans lequel le substrat de support (14) est agencé entre le module d'affichage à DEL et le panneau de commande à la manière d'un sandwich pour supporter un dispositif d'affichage à DEL, **caractérisé en ce que** le substrat de support (14) est fait de fibres de carbone, et **en ce que** le module d'affichage à DEL comprend : un panneau avant (11), une plaque de lampe (12) et un coussinet (13) qui sont agencés en séquence, où le coussinet (13) adhère à la plaque de lampe (12) par versage d'un matériau thermiquement conducteur dans des trous traversants du coussinet (13), et adhère au côté du substrat de support (14) en direction de la plaque de lampe (12) .

2. Ecran d'affichage à DEL selon la revendication 1, dans lequel des unités luminescentes à DEL et des circuits sont agencés sur la plaque de lampe (12), les unités luminescentes à DEL étant agencées selon une matrice de points, et dans lequel le module d'affichage à DEL est fixé sur un côté du substrat de support (14).

3. Ecran d'affichage à DEL selon la revendication 1, dans lequel le dispositif d'affichage à DEL comprend en outre un panneau arrière (16) et une boîte en forme de X (15), dans lequel le panneau de commande et une alimentation sont agencés à l'intérieur de la boîte en forme de X (15), la boîte en forme de X (15) est agencée dans le panneau arrière (16), et le panneau arrière (16) est connecté de façon fixe au substrat de support (14).

4. Ecran d'affichage à DEL selon la revendication 3, dans lequel des trous traversants sont agencés dans le substrat de support (14), la boîte en forme de X (15) logeant le panneau de commande est agencée sur un autre côté du substrat de support (14) opposé au module d'affichage à DEL, et une interface sur le panneau de commande est connectée électriquement à une plaque de lampe (12) du module d'affichage à DEL via les trous traversants.

5. Ecran d'affichage à DEL selon la revendication 4, dans lequel des bossages de renforcement (144) sont agencés autour du substrat de support (14), et font saillie sur un côté du substrat de support (14) en direction du panneau arrière (16) pour renforcer la résistance du substrat.

6. Ecran d'affichage à DEL selon la revendication 1, dans lequel le substrat de support (14) a une épaisseur située dans la plage allant de 0,8 mm à 2 mm.

7. Ecran d'affichage à DEL selon la revendication 5, dans lequel chacun des bossages de renforcement (144) a une épaisseur située dans la plage allant de 2 mm à 8 mm.

8. Ecran d'affichage à DEL selon la revendication 7, dans lequel chacun des bossages de renforcement (144) a une section transversale trapézoïdale, rectangulaire ou elliptique.

9. Dispositif d'affichage à DEL qui est assemblé par au moins un écran d'affichage à DEL unitaire selon l'une quelconque des revendications 1 à 8.

10. Procédé de fabrication du substrat de support (14) selon l'une quelconque des revendications 1 à 8, comprenant les étapes S1 à S4 qui suivent, dans lequel :
l'étape S1 comprend : la préparation d'un préimprégné, qui comprend :
la préparation d'un matériau précurseur de fibres de carbone, et le tricotage du matériau précurseur de fibres de carbone en une étoffe de fibres de carbone, l'addition de résine dans l'étoffe de fibres de carbone pour former le préimprégné ;
l'étape S2 comprend : la préparation de feuilles de substrat de support, qui comprend :
le découpage et la perforation du préimprégné, pour que soient obtenues les feuilles de substrat de support ayant des tailles convenables ;
l'étape S3 comprend : un préformage, qui comprend :
la disposition en couches des feuilles de substrat de support préparées dans un moule ; et l'étape S4 comprend : un moulage, qui comprend :
le pressage à chaud des feuilles de substrat de support disposées en couche dans le moule.
